# EUROPÄISCHE PATENTSCHRIFT

(11) **EP 2 179 196 B1**
(45) Veröffentlichungstag und Bekanntmachung des Hinweises auf die Patenterteilung: **01.05.2013**
(21) Anmeldenummer: 08784705.9
(22) Anmeldetag: 11.07.2008
(51) Int. Cl.: F16F 15/126, F16D 3/76

(54) **DREHELASTISCHE KUPPLUNG**
TORSIONALLY ELASTIC COUPLING
ACCOUPLEMENT ÉLASTIQUE EN TORSION

(30) Priorität: 16.07.2007 DE 102007033336
(43) Veröffentlichungstag der Anmeldung: 28.04.2010
(73) Patentinhaber: Voith Turbo Hochelastische Kupplungen Gmbh&Co. Kg, 45307 Essen (DE)
(72) Erfinder: BECKER, Markus, 44388 Dortmund (DE); FROHS, Peter, 42549 Velbert (DE)
(74) Vertreter: Dr. Weitzel & Partner
(86) Internationale Anmeldenummer: PCT/EP2008/005664
(87) Internationale Veröffentlichungsnummer: WO 2009/010237

(56) Entgegenhaltungen:
- EP-A- 0 952 365
- DE-A1- 3 635 702
- DE-A1- 3 925 678
- DE-A1- 4 221 417

## Beschreibung

Die Erfindung betrifft eine drehelastische Kupplung gemäß dem Oberbegriff von Anspruch 1.

Drehelastische Kupplungen, die in stationären Anlagen und mobilen Anlagen, beispielsweise einem Kraftfahrzeugantriebsstrang, verwendet werden, dienen der Übertragung von Drehmoment beziehungsweise Drehleistung bei gleichzeitiger Drehschwingungsdämpfung. Herkömmlich wurden solche drehelastischen Kupplungen beispielsweise in Schienenfahrzeugen im Triebstrang zwischen der Antriebsmaschine und der Antriebsachse beziehungsweise den Antriebsrädern eingesetzt.

Die Anforderungen an die Drehmomentkapazität von Bauteilen im Antriebsstrang sowohl von mobilen als auch von stationären Anlagen steigen stetig. Im Wesentlichen ist dies durch die sich stark entwickelnde Dieseltechnologie zu begründen. Turboaufladung und Hochdruckeinspritzsysteme haben die Drehmomentkapazität von Dieselmotoren in den letzten Jahren verdreifacht. Dies führt dazu, dass immer höhere Drehmomente von immer kleineren Dieselmotoren erzeugt werden und dementsprechend von immer kleineren Bauteilen im Antriebsstrang übertragen werden müssen. Gleichzeitig werden die sich drehenden Massen der Motoren immer leichter, so dass die kleineren Motoren stärkere Drehschwingungserreger darstellen, im Vergleich zu ihren gleich starken jedoch größeren Vorgängern.

Das Problem der erhöhten Drehschwingungserregung wird dadurch verschärft, dass für Verbrennungsmotoren, insbesondere Dieselmotoren in allen Anwendungsbereichen immer schärfere gesetzliche Abgasvorschriften in Kraft treten, welche nicht allein mit abgasseitigen Filtersystemen erreicht werden können. Daher müssen zusätzlich Maßnahmen ergriffen werden, die den Verbrennungsprozess im Motor optimieren, was zu einer weiteren Erhöhung der Drehschwingungsanregung führt und verstärkt führen wird. Hierdurch werden die vergleichsweise kleineren Bauteile im Antriebsstrang auch noch höheren Drehschwingungen ausgesetzt als die herkömmlichen vergleichsweise größeren Bauteile.

Als Folge dieser Entwicklung werden auch in kompakten Antriebssträngen, in denen bislang keine Drehschwingungsdämpfer erforderlich waren, zunehmend hochelastische Kupplungen benötigt, die die Schwingungen im Antriebsstrang wieder auf ein für die übrigen Bauteile erträgliches Maß reduzieren. Diese Kupplungen müssen geeignet sein, bei einer kleineren Baugröße vergleichsweise größere Drehmomente übertragen zu können und zugleich im Vergleich zu herkömmlichen Ausführungen eine höhere Dämpfungskapazität für Drehschwingungen zur Verfügung zu stellen.

Herkömmlich kommen in kompakten Anwendungen vor allem elastische Kupplungen mit sogenannten axialen elastischen Verbindungsgliedern in Betracht. Bei solchen Kupplungen, wie sie beispielsweise in der DE 39 25 678 C2 beschrieben sind, ist eine erste axiale Außenseite des elastischen Verbindungsgliedes mit dem treibenden Teil der Kupplung, auch Primärteil genannt, verbunden, und eine zweite axiale Außenseite, die der ersten axialen Außenseite entgegengesetzt ist, ist mit dem getriebenen Teil, auch Sekundärteil genannt, verbunden. Auf das elastische Verbindungsglied wird eine begrenzte Druckspannung aufgebracht, welche zugleich auf ein axiales Reiblager wirkt, um eine Reibungsdämpfung zu erzielen.

Weitere elastische Kupplungen mit axialen elastischen Verbindungsgliedern sind in den Dokumenten DE 36 35 702 C2, DE 42 21 417 C2 und DE 43 30 966 C2 beschrieben. Ein Nachteil bei solchen Kupplungen mit axialem elastischen Verbindungsglied, die insbesondere als Vorschaltkupplungen verwendet werden, ergibt sich aus der begrenzten Drehmomentkapazität. Das mit solchen Kupplungen übertragbare Drehmoment kann nur durch Vergrößern der Anschlussfläche der elastischen Verbindungsglieder, welche in Radialrichtung verläuft, erreicht werden. Aufgrund des begrenzten Bauraums, der zum Einbau der elastischen Kupplung häufig nur zur Verfügung steht, und der insbesondere eine Ausdehnung der elastischen Kupplungen in ihrem Durchmesser nicht zulässt, können die für hohe Drehmomente notwendigen Anschlussflächen der Verbindungsglieder nicht ausgeführt werden.

Zur Übertragung größerer Drehmomente sind elastische Kupplungen mit sogenannten radialen Verbindungsgliedern geeignet, wie sie beispielsweise in dem Dokument DE 1 259 150 beschrieben werden. Solche elastischen Kupplungen, wie sie die vorliegende Erfindung betrifft, weisen ein Primärteil und ein Sekundärteil auf, die über ein druckvorgespanntes, auf Torsion in Umfangsrichtung von Primärteil und Sekundärteil beanspruchtes elastisches Verbindungsglied drehmomentübertragend miteinander verbunden sind, wobei das elastische Verbindungsglied über in Radialrichtung hintereinander angeordnete Anschlussflächen beziehungsweise sich in Radialrichtung gegenüberstehende Anschlussflächen mit dem Primärteil und dem Sekundärteil drehmomentübertragend verbunden ist. Auch bei solchen Kupplungen mit radialen elastischen Verbindungsgliedern werden die Verbindungsglieder vorgespannt, indem ihre beiden Anschlussflächen in Axialrichtung relativ zueinander verschoben werden.

Die beschriebenen elastischen beziehungsweise hochelastischen Kupplungen mit radialem elastischem Verbindungsglied zeichnen sich zwar durch eine große Drehmomentkapazität aus, weil sie mit vergleichsweise großen Anschlussflächen der elastischen Verbindungsglieder ausgeführt werden können, weil die Anschlussflächen in Axialrichtung beziehungsweise im wesentlichen in Axialrichtung verlaufen und dieser Axialrichtung die Bauraumbeschränkungen in der Praxis nicht so stark wie in Radialrichtung vorhanden sind. Ihre Schwingungsdämpfungseigenschaften sind jedoch aufgrund dessen, dass die Dämpfung allein über die elastischen Verbindungsglieder, die in der Regel aus Gummi hergestellt sind, erreicht wird, begrenzt.

Der Katalog hochelastische Schaltkupplungen PNEUMAFLEX KA von Rexroth (Pneumaflex ist ein eingetragenes Warenzeichen) mit der Nr. RDE 75 426 09.97 zeigt eine Schaltkupplung mit in Reihe zu Reibkupplungen geschalteten drehelastischen Verbindungsgliedern, die als radiale Verbindungsglieder ausgeführt sind. Die Reibkupplungen dienen der Schlupfüberbrückung beim Einschalten der Kupplung, das heißt sie passen die Drehzahl der beiden Hälften der Reibkupplungen zunehmend an. Eine Reibungsdämpfung im eingeschalteten Zustand der Kupplung, das heißt während des Betriebes der Kupplung, ist aufgrund der seriellen Anordnung mit den elastischen Verbindungsgliedern nicht möglich.

Der vorliegenden Erfindung liegt die Aufgabe zugrunde, eine drehelastische, insbesondere hochelastische Kupplung zum Einsatz in vergleichsweise kompakten Antriebssträngen mobiler oder stationärer Anlagen, insbesondere für Kraftfahrzeugantriebsstränge, anzugeben, welche sowohl eine hohe Drehmomentkapazität aufweist als auch ausgezeichnete Drehschwingungsdämpfungseigenschaften bietet.

Die erfindungsgemäße Aufgabe wird durch eine drehelastische Kupplung mit den Merkmalen von Anspruch 1 gelöst. In den abhängigen Ansprüchen sind vorteilhafte und besonders zweckmäßige Ausgestaltungen der Erfindung angegeben.

Die erfindungsgemäße drehelastische Kupplung weist ein radiales elastisches Verbindungsglied auf, das heißt, das elastische Verbindungsglied ist über eine erste radial außenliegende Anschlussfläche mit dem Primärteil der Kupplung und über eine zweite radial innenliegenden Anschlussfläche mit dem Sekundärteil der Kupplung drehmomentübertragend verbunden. Das elastische Verbindungsglied kann dabei unmittelbar an dem Primärteil oder einem formschlüssig oder kraftschlüssig am Primärteil angeschlossenen Element angeschlossen, beispielsweise anvulkanisiert, sein. Ferner kann das elastische Verbindungsglied mit seiner zweiten Anschlussfläche ebenso unmittelbar an dem Sekundärteil oder einem kraftschlüssig oder formschlüssig am Sekundärteil angeschlossenen Element angeschlossen sein, insbesondere anvulkanisiert sein.

Um eine Druckvorspannung in dem elastischen Verbindungsglied zu erzeugen, welche zu einer Lebensdauerverlängerung des elastischen Verbindungsgliedes, das durch die Drehmomentübertragung und insbesondere die Schwingungen bei der Drehmomentübertragung beansprucht wird, führt, sind die beiden Anschlussflächen in Axialrichtung der Kupplung relativ zueinander verschoben, verglichen mit einer Position der beiden Anschlussflächen in einem nicht vorgespannten Zustand des elastischen Verbindungsgliedes. Diese Erzeugung der Druckvorspannung beziehungsweise die Verschiebung der Anschlussflächen relativ zueinander ist insbesondere permanent vorgesehen und wird mittels einer Spanneinrichtung aufrechterhalten. Wenn die Druckvorspannung durch die Spanneinrichtung permanent aufrechterhalten wird, so bedeutet dies, dass die Spanneinrichtung während des Betriebs der drehelastischen Kupplung nicht betätigbar ist, um die Druckvorspannung beziehungsweise die relative Verschiebung der Anschlussflächen des elastischen Elementes in Axialrichtung aufzuheben. Gemäß einer Ausführungsform ist es dabei jedoch möglich, die Größe der Druckvorspannung beziehungsweise das Ausmaß der relativen Verschiebung während des Betriebs mittels der Spanneinrichtung oder einer zusätzlich vorgesehenen Einrichtung zu variieren. Insbesondere ist die Spanneinrichtung jedoch derart ausgeführt, dass die axiale Position der beiden Anschlussflächen relativ zueinander während des Betriebs der elastischen Kupplung konstant ist.

Damit in dem elastischen Verbindungsglied eine Druckvorspannung erzeugt wird beziehungsweise eine Druckkraft zwischen dem Primärteil und dem Sekundärteil über das elastische Verbindungsglied übertragen wird, weist jede Anschlussfläche zumindest einen Bereich auf, der gegenüber der Axialrichtung und damit der Verschieberichtung geneigt verläuft. Gegenüber einem nicht vorgespannten Zustand des elastischen Verbindungsgliedes sind die beiden geneigt verlaufenden Bereiche der Anschlussflächen im vorgespannten Zustand des elastischen Verbindungsgliedes aufeinander zu verschoben. Der Bereich überträgt somit die Druckkraft zwischen dem elastischen Verbindungsglied und dem Primärteil beziehungsweise dem Sekundärteil. Gemäß einer Ausführungsform kann die erste Anschlussfläche und/oder die zweite Anschlussfläche insgesamt geneigt gegenüber der Axialrichtung verlaufen. Dabei sind sowohl ebene Anschlussflächen als auch gewölbte oder unebene Anschlussflächen denkbar. Beispielsweise kann dann die Anschlussfläche einen in einem Axialschnitt durch die Kupplung gesehen parallelen Abschnitt zur Axialrichtung beziehungsweise Drehachse und einen hierzu geneigt verlaufenden Abschnitt aufweisen und sich insbesondere genau aus diesen beiden Abschnitten zusammensetzten.

Erfindungsgemäß ist zwischen dem Primärteil und dem Sekundärteil ein Axiallager vorgesehen, welches eine relative Verdrehung in Umfangsrichtung der Kupplung zwischen dem Primärteil und dem Sekundärteil zulässt. Auf dieses Axiallager wird mittels der Spanneinrichtung, welche die relative Verschiebung der beiden Anschlussflächen des elastischen Verbindungsgliedes aufrecht erhält, eine Druckspannung aufgebracht, welche als Normalkraft zu einer Gleitreibkraft im Axiallager wirkt, wenn aufgrund der relativen Verdrehung zwischen dem Primärteil und dem Sekundärteil Gleitreibung im Axiallager beziehungsweise der sich im Axiallager gegenüberstehenden Lagerflächen auftritt. Das Axiallager bewirkt eine Gleitreibdämpfung, wobei die Dämpfung hinsichtlich des Antriebsleistungsflusses durch die drehelastische Kupplung parallel zu der drehelastischen Dämpfung mittels des elastischen Verbindungsgliedes vorgesehen ist. Dies wird vorteilhaft dadurch erreicht, dass das elastische Verbindungsglied beziehungsweise die elastischen Verbindungsglieder und das gleitreibdämpfende Axiallager oder die gleitreibdämpfenden Axiallager zwischen denselben Bauteilen der drehelastischen Kupplung oder denselben Bauteilgruppen, innerhalb von welcher die einzelnen Bauteile jeweils drehfest aneinander angeschlossen sind, angeordnet sind.

Besonders vorteilhaft bringt die Spanneinrichtung die Druckspannung über das elastische Verbindungsglied auf das Axiallager auf. Dementsprechend können die geneigten Bereiche hinsichtlich ihrer Neigungsrichtung derart gewählt sein, dass sie die Druckvorspannung in Richtung des Axiallagers bewirken.

Das Axiallager ist insbesondere als trockenlaufendes oder nasslaufendes Reiblager mit zwei aufeinander gleitenden Reibflächen ausgeführt. Beispielsweise ist auf einem der beiden sich in Umfangsrichtung der Kupplung relativ zueinander bewegenden Bauteilen zur Ausbildung der Reibfläche eine Reibscheibe, die beispielsweise kreisringförmig ausgeführt sein kann und über dem Umfang der drehelastischen Kupplung verläuft, vorgesehen. Zusätzlich kann auch auf der gegenüberliegenden Fläche eine zweite entsprechende Reibscheibe vorgesehen sein. Gemäß einer alternativen Ausführungsform ist es möglich, auf einem oder beiden sich relativ zueinander bewegenden Bauteilen der Kupplung eine Vielzahl von über dem Umfang verteilten Reibscheiben anzuordnen, die mit Abstand zueinander angeordnet sein können oder aneinander anliegen können. Der Vorteil solcher Reibscheiben, wenn diese als demontierbare Bauteile vorgesehen sind, liegt darin, dass sie als Verschleißteile ausgetauscht werden können.

Die Spanneinrichtung kann als lösbare mechanische Verbindung ausgeführt sein, wobei sie insbesondere derart gestaltet ist, dass sie nur im Nichtbetrieb der Kupplung, das heißt bei Stillstand, gelöst werden kann. Selbstverständlich ist es alternativ auch möglich, die Druckvorspannung durch eine nicht lösbare mechanische Verbindung zwischen zwei Bauteilen, die als Spanneinrichtung wirken, vorzusehen, beispielsweise durch eine stoffschlüssige Verbindung wie Verschweißen, Verlöten oder Verkleben. Besonders vorteilhaft ist die Spanneinrichtung als Verschraubung, Vernietung und/oder Verstiftung ausgeführt, wie nachfolgend noch mit Bezug auf die Figuren gemäß einem Ausführungsbeispiel beschrieben wird.

Das elastische Verbindungsglied kann vorteilhaft an zwei Ringen, einem Innenring und einem Außenring, angeschlossen, insbesondere anvulkanisiert sein. Die Druckvorspannung im elastischen Element wird dann durch axiales Verschieben der beiden Ringe relativ zueinander erreicht, wobei selbstverständlich für diese relative Verschiebung entweder nur einer der beiden Ringe verschoben wird, beispielsweise wenn dieser an einem weiteren Bauteil festgeschraubt wird, oder gleichzeitig beide Ringe verschoben werden. Beispielsweise kann der Außenring an einem Gegenelement unter Herstellung der Druckvorspannung verschraubt sein, wobei das Gegenelement zugleich die notwendige Reaktionskraft beziehungsweise Gegenkraft auf den Innenring ausübt. Das Gegenelement ist insbesondere das Primärteil der Kupplung oder ein formschlüssig oder kraftschlüssig an diesem angeschlossenes Bauteil. Je nach Definition kann auch der Außenring als Primärteil beziehungsweise Teilelement des Primärteils bezeichnet werden, das heißt, die Antriebsleistung wird über diesen in die elastische Kupplung eingebracht.

Sowohl der genannte Außenring als auch der genannte Innenring können, jedoch müssen nicht, als Vollring, das heißt über dem Umfang der Kupplung geschlossener Ring, ausgeführt sein. Alternativ kommen auch eine Vielzahl von mit Abstand zueinander angeordnete oder aneinander angeschlossene Ringsegmente in Betracht.

Auch das elastische Verbindungsglied, welches insbesondere aus Gummi hergestellt ist, kann als Vollring, geschlossener Ring oder in Form einer Vielzahl von Ringsegmenten, die über dem Umfang der Kupplung angeordnet sind, ausgeführt sein. Dabei sind beliebige Kombination zwischen dem Innenring als Vollring oder als Ringsegmente, dem Außenring als Vollring oder als Ringsegmente und dem elastischen Verbindungsglied als Vollring oder als Ringsegmente denkbar.

Das elastische Verbindungsglied kann, insbesondere wenn es als Gummielement ausgeführt ist, entweder aus einem homogenen Material oder als Verbundmaterial mit Teilbereichen verschiedener Materialeigenschaften ausgeführt sein. Beispielsweise kommt eine laminierte Ausführungsform in Betracht, wobei zwischen den einzelnen Gummibereichen auch Metallbereiche beziehungsweise Metallringe vorgesehen sein können.

Die erfindungsgemäße elastische beziehungsweise hochelastische Kupplung ist gemäß einer Ausführungsform als nicht schaltbare Kupplung ausgeführt, das heißt, wenn diese in einem Antriebsstrang angeordnet ist, findet über die elastische Kupplung in allen Betriebszuständen eine Drehmomentübertragung und Drehschwingungsdämpfung statt.

Die Erfindung soll nachfolgend anhand eines Ausführungsbeispiels exemplarisch beschrieben werden.

Es zeigen:
- Figur 1: eine erfingdungsgemäß ausgeführte drehelastische Kupplung im montierten Zustand;
- Figur 2: die elastische Kupplung aus der Figur 1 im montierten Zustand, jedoch noch ohne vorgespanntes elastisches Verbindungsglied.

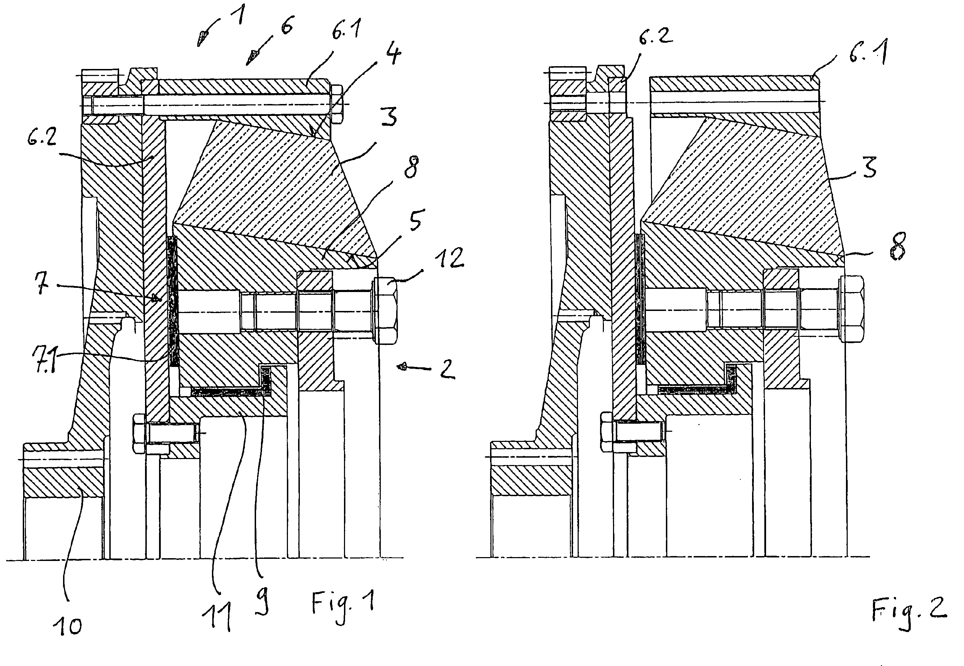

Gemäß der Figur 1 ist ein elastisches beziehungsweise drehelastisches Verbindungsglied 3 mit seiner radial außenliegenden ersten Anschlussfläche 4 am Primärteil 1 und mit seiner zweiten Anschlussfläche 5, die radial innenliegend angeordnet ist, am Sekundärteil 2 angeschlossen. Vorliegend erfolgt der Anschluss jeweils über eine Anvulkanisierung. Die erste Anschlussfläche 4 ist an einem ersten Anschlussring 6.1, vorliegend als über dem gesamten Umfang der Kupplung einstückig verlaufender Außenring ausgeführt, angeschlossen beziehungsweise anvulkanisiert, und die zweite Anschlussfläche 5 ist an einem zweiten Anschlussring 8, vorliegend als über dem gesamten Umfang der Kupplung einstückig verlaufender Innenring ausgeführt, angeschlossen beziehungsweise anvulkanisiert.

Der erste Anschlussring 6.1 ist mit einem Kupplungseingang, über welchen Antriebsleistung beziehungsweise Drehmoment in die Kupplung übertragen wird, verschraubt. Der Kupplungseingang wird vorliegend durch das Schwungrad 10 eines Verbrennungsmotors, insbesondere Dieselmotors, gebildet. Vorliegend ist zwischen dem ersten Anschlussring 6.1 und dem Kupplungseingang beziehungsweise dem Schwungrad 10 eine zusätzliche Scheibe als Gegenelement 6.2 der Spanneinrichtung 6, umfassend oder bestehend aus dem ersten Anschlussring 6.1, der zugehörigen Verschraubung und dem Gegenelement 6.2, angeordnet. Durch Anziehen der Schrauben der Verschraubung der Spanneinrichtung 6 wird der erste Anschlussring 6.1 (Außenring) entgegen der Druckkraft des elastischen Verbindungsgliedes 3 in Richtung zu dem Gegenelement 6.2 in Axialrichtung der Kupplung verschoben, bis er an diesem anliegt. Zwischen dem Gegenelement 6.2 und dem zweiten Anschlussring 8 (Innenring) ist ein Axiallager 7 positioniert, welches vorliegend eine Reibscheibe 7.1 aufweist, die an dem zweiten Anschlussring 8 angeschlossen, insbesondere angeschraubt ist. Somit übt das Gegenelement 6.2 beim Anziehen der Verschraubung der Spanneinrichtung 6 über das Axiallager 7 eine Gegenkraft auf den zweiten Anschlussring 8 aus, welche im verschraubten beziehungsweise druckvorgespannten Zustand der Kupplung während des Betriebs aufrechterhalten wird und als Normalkraft beim Auftreten von Gleitreibung im Axiallager 7 wirkt, wenn sich der erste Anschlussring 6.1 beziehungsweise der daran angeschlossene Kupplungseingang und das Gegenelement 6.2 relativ zu dem zweiten Anschlussring 8 und damit dem Sekundärteil 2 der Kupplung verdrehen.

Je nach Definition kann als Primärteil 1 der Kupplung der erste Anschlussring 6.1, der Kupplungseingang beziehungsweise vorliegend das Schwungrad 10 und/oder das Gegenelement 6.2 betrachtet werden. Entscheidend ist nur, dass im Betrieb der Kupplung durch axiales Verschieben beziehungsweise Verschobenhalten des Primärteils 1 beziehungsweise eines an diesem angeschlossenen Elementes, vorliegend des ersten Anschlussringes 6.1, eine Druckvorspannung auf das elastische Verbindungsglied 3 erzeugt wird und zugleich das Axiallager 7 zwischen dem Primärteil 1 und dem Sekundärteil 2 mit derselben Druckkraft, welche die Druckvorspannung erzeugt, beaufschlagt wird, um im Betrieb im Axiallager 7 eine Reibdämpfung beziehungsweise verstärkte Reibdämpfung zu erreichen.

Das Ausmaß der relativen Verschiebung des ersten Anschlussringes 6.1 gegenüber dem zweiten Anschlussring 8 beim Anziehen der Verschraubung der Spanneinrichtung 6 wird besonders durch einen Vergleich der Figuren 1 und 2, in welchen jeweils nur eine Hälfte über der Drehachse der Kupplung im Axialschnitt gesehen dargestellt ist, deutlich.

Das in den Figuren dargestellte Gegenelement 6.2 als separates Bauteil zu dem Kupplungseingang beziehungsweise dem Schwungrad 10 kann abweichend auch in den Kupplungseingang beziehungsweise das Schwungrad 10 oder den ersten Anschlussring 6.1 integriert werden, das heißt einteilig mit diesem ausgeführt werden.

Bei der gezeigten Ausführungsform ist ein am Primärteil 1 montierter Tragzapfen 11, vorliegend in einer geschlossenen Ringform, angeschlossen, vorliegend verschraubt, der alternativ auch einteilig mit dem Kupplungseingang oder dem Gegenelement 6.2 ausgeführt sein könnte oder auch eingespart werden könnte. Zwischen dem Tragzapfen 11 und dem Sekundärteil 2, hier dem zweiten Anschlussring 8, ist ein Radiallager 9 vorgesehen. Bei der gezeigten Ausführungsform weist das Radiallager 9 auch ein zweites Axiallager als Gegenlager zu dem ersten Axiallager 7 auf. Somit wird eine Verliersicherung hergestellt. Das zweite Axiallager könnte jedoch auch entfallen oder außerhalb des Radiallagers 9 angeordnet sein.

Am Sekundärteil 2 kann ein Kupplungsausgang, insbesondere in Forme einer Welle, lösbar oder unlösbar montiert werden, beispielsweise mittels der dargestellten Verschraubung 12. Wenn sowohl der Primärteil 1, vorliegend in Form des Kupplungseingangs beziehungsweise des Schwungrads 10, als auch der Kupplungsausgang lösbar an den Bauteilen befestigt sind, an welchen das elastische Verbindungsglied 3 anvulkanisiert und/oder unlösbar angeschlossen ist, so kann nach einem Verschleiß das elastische Verbindungsglied 3 zusammen mit den daran angeschossenen Bauteilen, vorliegend dem ersten Anschlussring 6.1 und dem zweiten Anschlussring 8, gegen eine entsprechende "neue" Baueinheit ausgetauscht werden.

Das elastische Verbindungsglied 3 kann beispielsweise aus einem Polymerwerkstoff hergestellt sein. Vorliegend weist es zwar konzentrisch zur Drehachse der Kupplung angeordnete Anschlussflächen 4, 5 auf. In einem Axialschnitt durch die Kupplung gesehen, sind diese Anschlussflächen 4, 5 jedoch nicht parallel zu der Drehachse angeordnet, was ebenfalls möglich wäre, sondern schräg beziehungsweise in einem spitzen Winkel hierzu. Der Winkel ist dabei derart gewählt, dass bei einem Verspannen des elastischen Verbindungsgliedes 3 mittels der Spanneinrichtung 6 die Bauteile, an denen das elastische Verbindungsglied 3 anvulkanisiert ist, vorliegend der erste Anschlussring 6.1 und der zweite Anschlussring 8, gegen das elastische Verbindungsglied 3 gepresst werden. Hierdurch wird eine Scherspannung an der Schnittstelle zwischen elastischem Verbindungsglied 3 und angeschlossenen Bauteilen vermindert, was einem Abriss entgegenwirkt.

Bei der gezeigten Ausführungsform ist ferner das elastische Verbindungsglied 3 trapezförmig gestaltet, wobei die erste Anschlussfläche 4 in einem Axialschnitt durch die Kupplung betrachtet kürzer ist als die zweite Anschlussfläche 5. Aufgrund dessen, dass die erste Anschlussfläche 4 jedoch auf einem größeren Durchmesser als die zweite Anschlussfläche 5 liegt, kann zugleich die Gesamtfläche der ersten Anschlussfläche gleich oder größer als jene der zweiten Anschlussfläche 5 ausgeführt werden, wenn dies gewünscht ist.

## Patentansprüche

1. Drehelastische Kupplung
mit einem Primärteil (1) und einem Sekundärteil (2), die drehmomentübertragend miteinander verbunden sind, wobei das elastische Verbindungsglied (3) eine in Radialrichtung der Kupplung außenliegende erste Anschlussfläche (4) und eine in Radialrichtung der Kupplung innenliegende zweite Anschlussfläche (5) aufweist, von denen eine mit dem Primärteil (1) und die andere mit dem Sekundärteil (2) drehmomentübertragend verbunden ist; und
zur Erzeugung der Druckvorspannung die beiden Anschlussflächen (4, 5) in Axialrichtung der Kupplung gegenüber einem nicht vorgespannten Zustand relativ zueinander verschoben sind; wobei
jede Anschlussfläche (4,5) zumindest einen Bereich aufweist, der gegenüber der Axialrichtung geneigt verläuft, wobei die beiden geneigt verlaufenen Bereiche gegenüber einem nicht vorgespannten Zustand des elastischen Verbindungsgliedes (3) aufeinander zu verschoben sind, so dass eine Druckkraft zwischen dem Primärteil (1), dem Sekundärteil (2) und dem elastischen Verbindungsglied (3) übertragen wird;
mit einer Spanneinrichtung (6), welche die relative Verschiebung der beiden Anschlussflächen (4, 5) und damit die Druckvorspannung aufrechterhält; **dadurch gekennzeichnet, dass**
zwischen dem Primärteil (1) und dem Sekundärteil (2) ein Axiallager (7) vorgesehen ist, welches eine relative Verdrehung in Umfangsrichtung der Kupplung zwischen dem Primärteil (1) und dem Sekundärteil (2) zulässt, und
die Spanneinrichtung (6) ferner eine Druckspannung auf das Axiallager (7) aufbringt, welche als Normalkraft zu einer Gleitreibkraft im Axiallager (7) bei der relativen Verdrehung zwischen dem Primärteil (1) und dem Sekundärteil (2) wirkt.

2. Drehelastische Kupplung gemäß Anspruch 1, **dadurch gekennzeichnet, dass** die Spanneinrichtung (6) die Druckspannung über das elastische Verbindungsglied (3) auf das Axiallager (7) aufbringt.

3. Drehelastische Kupplung gemäß Ansprüche 1 oder 2, **dadurch gekennzeichnet, dass** die Spanneinrichtung (6) in Form einer lösbaren mechanischen Verbindung, insbesondere einer Verschraubung, Vernietung oder Verstiftung, ausgeführt ist.

4. Drehelastische Kupplung gemäß Anspruch 3, **dadurch gekennzeichnet, dass** die Spanneinrichtung (6) einen an dem elastischen Verbindungsglied (3), das insbesondere als geschlossener Ring oder mit einer Vielzahl von mit Abstand zueinander angeordneten Ringsegmenten in Umfangsrichtung der Kupplung ausgeführt ist, angeschlossenen ersten Anschlussring (6.1) aufweist, der an einer der beiden Anschlussflächen (4, 5) des elastischen Verbindungsgliedes (3) angeschlossen ist und welcher entgegen der elastischen Kraft des elastischen Verbindungsgliedes (3) mit einem Gegenelement (6.2) kraftschlüssig oder stoffschlüssig verbunden, insbesondere verschraubt ist, so dass eine Druckvorspannung in Axialrichtung der Kupplung in dem elastischen Verbindungsglied (3) erzeugt wird, und das Gegenelement (6.2) über das Axiallager (7) und insbesondere einen zweiten Anschlussring (8), der an der anderen Anschlussfläche (4, 5) des elastischen Verbindungsgliedes (3) angeschlossen ist, eine Gegenkraft auf die andere Anschlussfläche (4, 5) des elastischen Verbindungsgliedes (3) überträgt.

5. Drehelastische Kupplung gemäß Anspruch 4, **dadurch gekennzeichnet, dass** der erste und/oder der zweite Anschlussring (6.1, 8) als geschlossener Ring oder in Form einer Vielzahl von in Umfangsrichtung der Kupplung mit Abstand zueinander angeordneten Ringsegmenten ausgeführt ist/sind.

6. Drehelastische Kupplung gemäß einem der Ansprüche 1 bis 5, **dadurch gekennzeichnet, dass** das elastische Verbindungsglied (3) als Gummielement, insbesondere im Material homogenes und/oder einteiliges Gummielement, ausgeführt ist.

7. Drehelastische Kupplung gemäß einem der Ansprüche 4 bis 6, **dadurch gekennzeichnet, dass** der erste Anschlussring (6.1) als mit dem Primärteil (1) mechanisch verbundener, insbesondere verschraubter Außenring ausgeführt ist, der mittelbar oder unmittelbar an der ersten Anschlussfläche (4) angeschlossen ist.

8. Drehelastische Kupplung gemäß einem der Ansprüche 1 bis 7, **dadurch gekennzeichnet, dass** das Axiallager (7) eine Reibscheibe (7.1) aufweist, die insbesondere ringförmig über dem Umfang der Kupplung verlaufend ausgeführt ist, und am Primärteil (1) oder Sekundärteil (2) montiert ist und mit einer Reibfläche oder einer weiteren Reibscheibe am anderen Teil (1, 2) zusammenarbeitet.

9. Drehelastische Kupplung gemäß einem der Ansprüche 1 bis 8, **dadurch gekennzeichnet, dass** das Axiallager (7) als nass- oder trockenlaufendes Reiblager ausgeführt ist.

10. Drehelastische Kupplung gemäß einem der Ansprüche 8 oder 9, **dadurch gekennzeichnet, dass** die Reibscheibe (7.1) und insbesondere eine zweite Reibscheibe (1, 2) als austauschbare Verschleißteile demontierbar an der Kupplung angeschlossen sind.

11. Drehelastische Kupplung gemäß einem der Ansprüche 1 bis 10, **dadurch gekennzeichnet, dass** zwischen dem Primärteil (1) und dem Sekundärteil (2) zusätzlich zu dem Axiallager (7) ein Radiallager (9) vorgesehen ist.

12. Drehelastische Kupplung gemäß einem der Ansprüche 1 bis 11, **dadurch gekennzeichnet, dass** die Kupplung als stets drehmomentübertragende, nicht schaltbare Kupplung ausgeführt ist.

13. Drehelastische Kupplung gemäß einem der Ansprüche 1 bis 12, **dadurch gekennzeichnet, dass** die erste Anschlussfläche (4) und die zweite Anschlussfläche (5) parallel zueinander angeordnet sind, und insbesondere in einem Axialschnitt durch die Kupplung parallel zur Drehachse derselben oder in einem insbesondere spitzen Winkel, abweichend von 90°, zu dieser angeordnet sind.

## Claims

1. A torsionally elastic coupling,
having a primary part (1) and a secondary part (2), which are interconnected in torque-transferring fashion, whereas the elastic connecting member (3) has a first connecting surface (4) in radially outer direction of the coupling and a second connecting surface in radially inner direction of the coupling, one of which has is connected in a torque-transferring fashion to the primary part (1) and the other to the secondary part (2); and
in order to generate the initial compressive stress, the two connecting surfaces are shifted relative to one another with respect to a non-prestressed state; whereas
each connecting surface (4, 5) has at least one region which extends tilted with respect to the axial direction, whereas the two regions extending tilted are shifted towards one another with respect to a non-prestressed state of the elastic connecting member (3) so as to transmit a compression force between the primary part (1), the secondary part (2) and the elastic connecting member (3);
having a tensioning device (6), which maintains the relative shifting of both connecting surfaces (4, 5) and hence maintains the initial compressive stress;
**characterised in that**
an axial bearing (7) is provided between the primary part (1) and the secondary part (2), which permits a relative torsion in the circumferential direction of the coupling between the primary part (1) and the secondary part (2),
and the tensioning device (6) further applies a compression stress to the axial bearing (7), which acts as a normal force of a sliding friction force in the axial bearing (7) during the relative torsion between the primary part (1) and the secondary part (2).

2. The rotary elastic coupling according to claim 1, **characterised in that** the tensioning device (6) applies the compression stress via the elastic connecting member (3) to the axial bearing (7).

3. The rotary elastic coupling according to one of claims 1 or 2, **characterised in that** the tensioning device (6) is provided in the form of a releasable mechanical connection, in particular of a screw connection, rivet connection or pin connection.

4. A rotary elastic coupling according to claim 3, **characterised in that** the tensioning device (6) has a first connection ring (6.1) connected to the elastic connecting member (3), which is designed in particular as a closed ring or with a plurality of ring segments in the circumferential direction of the coupling arranged at a distance to one another, the connection ring is connected to one of the two connecting surfaces (4, 5) of the elastic connecting member (3) and is connected in a force-fitting manner or by material bonding, in particular screwed, with a mating element (6.2) against the elastic force of the elastic connecting member (3), so that an initial compressive stress is generated in axial direction of the coupling in the elastic connecting member (3), and the mating element (6.2) transmits a counteracting force to the other connecting surface (4, 5) of the elastic connecting member (3), via the axial bearing (7) and in particular a second connection ring (8) which is connected to the other connecting surface (4, 5) of the elastic connecting member (3).

5. The rotary elastic coupling according to claim 4, **characterised in that** the first and/or the second connection ring (6.1, 8) is/are designed as a closed ring or in the form of a plurality of ring segments arranged at a distance to one another in the circumferential direction of the coupling.

6. The rotary elastic coupling according to one of claims 1 to 5, **characterised in that** the elastic connecting member (3) is designed as a rubber element, in particular a rubber element which is homogeneous and/or as a single-part in the material.

7. The rotary elastic coupling according to one of claims 4 to 6, **characterised in that** the first connection ring (6.1) is designed as an outer ring mechanically linked to the primary part (1), in particular screwed, which is connected indirectly or directly to the first connecting surface (4).

8. The rotary elastic coupling according to one of claims 1 to 7, **characterised in that** the axial bearing (7) has a friction disc (7.1), which is designed to extend in particular in annular fashion over the circumference of the coupling, and is mounted on the primary part (1) or secondary part (2) and co-operates with a friction face or another friction disc on the other part (1,2).

9. The rotary elastic coupling according to one of claims 1 to 8, **characterised in that** the axial bearing (7) is designed as a wet or dry-running friction bearing.

10. The rotary elastic coupling according to one of claims 8 or 9, **characterised in that** the friction disc (7.1) and in particular a second friction disc (1, 2) are connected to the coupling as replaceable wear parts which can be disassembled.

11. The rotary elastic coupling according to one of claims 1 to 10, **characterised in that** a radial bearing (9) is provided between the primary part (1) and the secondary part (2) in addition to the axial bearing (7).

12. The rotary elastic coupling according to one of claims 1 to 11, **characterised in that** the coupling is designed as a constantly torque-transferring, non-switchable coupling.

13. The rotary elastic coupling according to one of claims 1 to 12, **characterised in that** the first connecting surface (4) and the second connecting surface (5) are arranged parallel to one another, and are arranged in particular in an axial section through the coupling parallel to the axis of rotation of the same or in a particularly acute angle, deviating from 90° to the same.

## Revendications

1. Accouplement élastique en torsion,
possédant une partie primaire (1) et une partie secondaire (2), qui sont reliées entre elles de façon à transmettre le couple de rotation, où l'organe de liaison élastique (3) présente une première surface de raccordement (4) dans la direction radiale externe de l'accouplement et une seconde surface de raccordement (5) dans la direction radiale interne de l'accouplement, l'une des surfaces de raccordement est reliée à la partie primaire (1) et l'autre est reliée à la partie secondaire (2) de façon à transmettre le couple de rotation; et
pour produire la précontrainte de pression les deux surfaces de raccordement (4, 5) sont déplacées l'une par rapport à l'autre dans la direction axiale de l'accouplement pour s'opposer à un état non-précontraint; où
chaque surface de raccordement (4,5) présente au moins une zone, s'étendant inclinée par rapport à la direction axiale, où les deux zones s'étendant inclinées sont déplaceés l'une vers l'autre pour s'opposer à un état non-précontraint de l'organe de liaison élastique (3), de sorte qu'une force de pression est transmise entre la partie primaire (1), la partie secondaire (2) et l'organe de liaison élastique (3);
muni d'un dispositif de serrage (6), qui maintient le décalage relatif des deux surfaces de raccordement (4, 5) et donc la précontrainte de pression; **caractérisé en ce qu'**
un palier axial (7) est prévu entre la partie primaire (1) et la partie secondaire (2), qui permet une rotation relative dans le sens de la circonférence de l'accouplement entre la partie primaire (1) et la partie secondaire (2), et
le dispositif de serrage (6) exerce en outre une contrainte de pression sur le palier axial (7), qui agit comme force normale d'une force de friction de glissement dans le palier axial (7) lors de la rotation relative entre la partie primaire (1) et la partie secondaire (2).

2. Accouplement élastique en rotation selon la revendication 1, **caractérisé en ce que** le dispositif de serrage (6) exerce la contrainte de pression sur le palier axial (7) par l'intermédiaire de l'organe de liaison élastique (3).

3. Accouplement élastique en rotation selon l'une des revendications 1 ou 2, **caractérisé en ce que** le dispositif de serrage (6) est sous forme de liaison mécanique amovible, en particulier de liaison à vis, liaison rivetée ou liaison à goupille.

4. Accouplement élastique en rotation selon la revendication 3, **caractérisé en ce que** le dispositif de serrage (6) présente une première bague de connexion (6.1) connectée à l'organe de liaison élastique (3), sous forme de bague fermée ou comportant une plularité de segments annulaires disposés à une distance les uns des autres dans le sens circonférentiel de l'accouplement, la bague de connexion est reliée à l'une des deux surfaces de raccordement (4, 5) de l'organe de liaison élastique (3) et qui est reliée par force ou par, connexion materielle en particulier par vis, avec un contre-élément (6.2), pour s'opposer à la force élastique de l'organe de liaison élastique (3) pour produire une précontrainte de pression dans la direction axiale de l'accouplement dans l'organe de liaison élastique (3), et le contre-élément (6.2) transmet une force contraire à l'autre surface de raccordement (4, 5) de l'organe de liaison élastique, par l'intermédiaire du palier axial (7) et en particulier d'une seconde bague de raccordement (8), elle-même connectée à l'autre surface de raccordement (4, 5) de l'organe de liaison élastique (3).

5. Accouplement élastique en rotation selon la revendication 4, **caractérisé en ce que** la première et/ou la seconde bague de connexion (6.1, 8) est/sont sous forme de bague fermée ou d'une pluralité de segments annulaires disposés à une distance les uns des autres dans le sens circonférentiel de l'accouplement.

6. Accouplement élastique en rotation selon l'une des revendications 1 à 5, **caractérisé en ce que** l'organe de liaison élastique (3) est sous forme d'élément en caoutchouc, en particulier un élément en caoutchouc homogène et/ou d'une seule pièce dans le matériau.

7. Accouplement élastique en rotation selon l'une des revendications 4 à 6, **caractérisé en ce que** la première bague de connexion (6.1) est sous forme de bague externe reliée mécaniquement à la partie primaire (1) en particulier par vissage, bague externe connectée indirectement ou directement à la première surface de raccordement (4).

8. Accouplement élastique en rotation selon l'une des revendications 1 à 7, **caractérisé en ce que** le palier axial (7) présente un disque de friction (7.1), qui en particulier est conçu en forme d'anneau s'étendant sur la circonférence de l'accouplement, et est monté sur la partie primaire (1) ou la partie secondaire (2) et coopère avec une surface de friction ou un autre disque de friction sur l'autre partie (1,2).

9. Accouplement élastique en rotation selon l'une des revendications 1 à 8, **caractérisé en ce que** le palier axial (7) est conçu comme palier de friction fonctionnant par voie humide ou fonctionnant à sec.

10. Accouplement élastique en rotation selon l'une des revendications 8 ou 9, **caractérisé en ce que** le disque de friction (7.1) et en particulier un second disque de friction (1, 2) sont connectés sous forme de pièces d'usure remplaçables et démontables au l'accouplement.

11. Accouplement élastique en rotation selon l'une des revendications 1 à 10, **caractérisé en ce qu'**un palier radial (9) est prévu entre la partie primaire (1) et la partie secondaire (2) en plus du palier axial (7).

12. Accouplement élastique en rotation selon l'une des revendications 1 à 11, **caractérisé en ce que** l'accouplement est conçu comme accouplement non-commutable, de façon à transmettre le couple de rotation en permanence.

13. Accouplement élastique en rotation selon l'une des revendications 1 à 12, **caractérisé en ce que** la première surface de raccordement (4) et la seconde surface de raccordement (5) sont agencées parallèles entre elles, et sont disposées en particulier en coupe axiale à travers l'accouplement parallèlement à l'axe de rotation de celui-ci ou dans un angle plus spécifiquement aigu, s'écartant de 90°, par rapport à celui-ci.
